# EUROPEAN PATENT SPECIFICATION

(11) **EP 2 797 812 B1**
(45) Date of publication and mention of the grant of the patent: **09.12.2020**
(21) Application number: 12821202.4
(22) Date of filing: 27.12.2012
(51) Int. Cl.: B64C 9/36, B64C 9/32

(54) **SUBSONIC PLANE OR FLIGHT SIMULATOR THEREOF, ADJUSTABLE FUSELAGE CONTROL SURFACE, COMPUTER PROGRAM PRODUCT AND METHOD**
UNTERSCHALLFLUGZEUG ODER FLUGSIMULATOR DAFÜR, EINSTELLBARE RUMPFSTEUERFLÄCHE, COMPUTERPROGRAMMPRODUKT UND VERFAHREN
AVION SUBSONIQUE OU SIMULATEUR DE VOL CORRESPONDANT, SURFACE DE COMMANDE DE FUSELAGE RÉGLABLE, PROGICIEL ET PROCÉDÉ

(30) Priority: 28.12.2011 NL 2008049
(43) Date of publication of application: 05.11.2014
(73) Proprietor: De Kroes, Jan Louis, 1217 PH Hilversum (NL)
(72) Inventor: De Kroes, Jan Louis, 1217 PH Hilversum (NL)
(74) Representative: V.O.
(86) International application number: PCT/NL2012/050931
(87) International publication number: WO 2013/100767

(56) References cited:
- DE-A1- 3 523 715
- US-A- 3 848 831
- US-A1- 2005 067 525
- US-A1- 2010 001 131

## Description

This invention relates to a subsonic plane, comprising an elongate fuselage with a cockpit placed near a first, front end of the fuselage, two wings placed on opposite sides of the fuselage, provided with ailerons, and a tail located near a second, rear end of the fuselage, which is provided with an elevator and a rudder.

Such a subsonic plane can be a commercial plane, for example, a passenger plane, a cargo plane, or a combi plane, in which a first part of the plane is used for transport of passengers and a second part for transport of cargo. Such planes are typically used in civil aviation and are generally known. The ailerons and the tail control surfaces, which comprise both the elevator and the rudder, form control elements of the plane. During use of the plane, stabilization and control of the plane proceed for an important part with the aid of these control elements. The elevator can be used for a vertical change of the course, the rudder for a horizontal change of the course and the ailerons for a rotation about the longitudinal axis of the plane. The control elements are usually operated by sending control commands to them from the cockpit, via communication channels running through the plane.

A disadvantage of such a known commercial plane is that it may become poorly controllable or even uncontrollable in case of drop-out of or damage to a propelling element, the ailerons, the elevator, the rudder, and/or the communication channels of the plane.

A further disadvantage of such a known commercial plane is that extreme weather conditions and/or disturbed flying conditions, such as stall, can cause the plane to become poorly controllable or even wholly uncontrollable. This may happen in that, in case of stall or deep stall, the tail control surfaces and/or engine intakes can end up at least partly in a turbulent wake of the wings and, as a result, can hardly, if at all, exert any influence on the flying condition of the plane anymore. So, because the tail control surfaces, especially the elevator, and/or the engine power cannot be properly used anymore to recover from stall or deep stall, the plane may become uncontrollable. This may even lead to catastrophic failure, such as crashing. The fact is that recovery from a usually fairly stable but inherently unsafe stall condition to a normal flying condition often requires particular skills of a pilot, such as, for example, thrust vectoring. Also, recovery, even if the pilot has such skills, is often not possible anymore within the available recovery time and the then present circumstances of use.

The object of the invention is to provide an improved subsonic plane of the type mentioned in the preamble. In particular, the object of the invention is to obtain a subsonic plane according to the preamble, which is relatively well-controllable in the event of drop-out or damage of a propulsion element, aileron, elevator, rudder and/or communication channel of the plane.

To this end, a subsonic plane according to claim 1 is provided. The fuselage of the subsonic plane is provided with at least one adjustable fuselage control surface for controlling the subsonic plane, wherein the fuselage control surface is adjustable between a neutral rest position and at least one working position in which the fuselage control surface extends away from the fuselage. In the event of drop-out or damage of a propulsion element, aileron, elevator, rudder and/or communication channel of the plane, by bringing the adjustable fuselage control surface into the working position, the fuselage control surface can influence the air currents outside the plane and the plane is controllable. Thus, a subsonic plane has been obtained that is relatively well controllable in the event of drop-out or damages of a propulsion means, aileron, elevator, rudder and/or communication channel of the plane.

By providing the fuselage of the plane with at least one adjustable fuselage control surface, the plane moreover can be restored from a stall or deep stall condition to a normal flying condition.

A major advantage of fuselage control surfaces according to the invention is that the occurrence of deep stall as an aerodynamic property in planes that are sensitive to such catastrophic failure due to their configuration may already be prevented during preliminary design. Improvement of design in an early phase generally prevents the necessity of taking corrective measures at high cost in a later stage or the possibility that use of the plane may include inherently unsafe flying conditions requiring uncommon skills of the flyer.

It is noted that 'neutral rest position' of the fuselage control surface is understood to mean that the fuselage control surface in this position hardly, if at all, influences air currents outside the plane. In this position, therefore, the fuselage control surface exerts no, or hardly any, controlling forces on the plane that influence the orientation of the plane. In the neutral rest position, the fuselage control surface preferably does not extend, or hardly extends, away from the fuselage.

In the neutral rest position the fuselage control surface does not influence, or hardly influences, the aerodynamics of the plane. It is thereby obviated that when the fuselage control surface is in the rest position, and then is not used to control the plane, the fuel consumption of the plane according to the invention is not influenced by parasite drag of the fuselage control surface.

As the adjustable fuselage control surface can also be in at least one working position in which the fuselage control surface extends away from the fuselage, the fuselage control surface in the working position influences air currents around the fuselage. As a consequence, the fuselage control surface can effect a desired change of the flying condition and attitude of the plane, for example, in an emergency situation such as deep stall or in the event where the regular elevator is not, or hardly, usable anymore.

It is noted that US 3 848 831 discloses an aircraft including fuselage flaps that may be extended outwardly of the fuselage to increase altitude control. It is further noted that DE 35 23 715 discloses an airplane provided with fuselage flaps to minimize a ratio between the lifting force and the air resistance.

It is also noted that US 2010/0001131 discloses a subsonic airplane provided with braking flaps. In addition, it is noted that US 2005/0067525 discloses a supersonic aircraft provided with a controlled structural member for reducing sound emissions.

Preferably, the fuselage control surface can be adjusted to a plurality of working positions in which the fuselage control surface also extends away from the fuselage. In this way, the extent to which the fuselage control surface extends away from the fuselage can be adjusted and the plane can be controlled relatively accurately.

Preferably, the fuselage control surface is disposed near the cockpit or near the rear end of the fuselage, so that the fuselage control surface is in a position of relatively low turbulence. Also in the case of stall or deep stall, the fuselage control surface then is not in the turbulent wake of the wings, so that the fuselage control surface, then too, can be utilized relatively well to influence the air currents around the fuselage and to control the plane.

With the fuselage control surface disposed near the cockpit or near the rear end of the fuselage, moreover, the fuselage control surface is positioned relatively far from the center of gravity of the plane. Due to this, a force exerted on the fuselage control surface has a relatively long arm and the force mentioned can exert a relatively large moment on the plane. Due to this, the fuselage control surface can be of relatively small design and/or the fuselage control surface in the working position only needs to extend away from the fuselage over a relatively short distance.

If the fuselage control surface is arranged near the front end of the plane, moreover, the distance between the cockpit and the fuselage control surface to be used as an emergency control surface is relatively short, which reduces the chances of drop-out of communication channels between the cockpit and the fuselage control surface.

By disposing the fuselage control surface near the cockpit, it can be made possible for a pilot or other crew member to have a relatively good view of the fuselage control surface. This can be very advantageous, for instance, in a situation where the pilot is forced to control the plane and/or the fuselage control surface substantially without sensory or electronic feedback.

A further advantage of an embodiment in which the fuselage control surface is disposed near the cockpit may be that the fuselage control surface is provided with a manual operating construction which is positioned relatively close to the position of a pilot. To this end, the fuselage control surface may be provided, for example, with a rack-and-pinion jack or screw jack unit. Thus, in case of failure of electrical systems, the fuselage control surface can yet be reliably operated.

A disadvantage of placing the fuselage control surface near the cockpit is that the use of a computer system is often indispensable for the management of the aerodynamic balance of the plane. The fact is that it is highly desirable, if not requisite, that the aerodynamic balance in all flying conditions be guaranteed. A placement at the rear of the fuselage has practically no adverse influence on the aerodynamic balance. That is why there is a preference for the fuselage control surface to be arranged near the rear end of the fuselage, for example, at the tail of the plane, because there too, by virtue of the long arm, a great influence can be exerted with little force.

In a preferred embodiment according to the invention, the fuselage control surface in the rest position forms a portion of the outer surface of the fuselage, so that the fuselage control surface then hardly, if at all, disturbs the intended action of tail control surfaces and ailerons and entails little or no extra air resistance, which is favorable from the viewpoint of fuel consumption.

In a further embodiment according to the invention, the adjustment of the fuselage control surface comprises only one degree of freedom, so that the construction of the adjustable fuselage control surface can be relatively simple. Moreover, the operation of the fuselage control surface can then be relatively simple as well, which may be advantageous, for instance, if the fuselage control surface is used substantially exclusively as an emergency control surface and a pilot will therefore have little experience in operating the fuselage control surface.

Preferably, the fuselage control surface is hingeable and/or slidable, so that the construction and/or the operation thereof can be relatively simple.

In a further embodiment according to the invention, the plane comprises a control unit for controlling the position and/or orientation of the fuselage control surface. As a consequence, the fuselage control surface can be controlled relatively accurately, which can make it possible to change the flying condition of the plane relatively accurately.

Optionally, the control unit comprises a computer, which can make it possible to control the fuselage control surface relatively simply and/or without much experience.

In the case where the plane is provided with a pressurized cabin, disposing the fuselage control surface outside the pressurized cabin can prevent any excess pressure prevailing in the pressurized cabin from dropping out when the fuselage control surface is in, or being brought into, the working position. That is why, preferably, a drive, if any, of the fuselage control surface is also disposed outside the pressurized cabin.

By providing the plane with a plurality of fuselage control surfaces, air currents around the plane can be manipulated at several places, enabling the plane to be controlled relatively accurately with the aid of the fuselage control surfaces.

In a further advantageous embodiment according to the invention, at least one fuselage control surface forms a top control surface which is disposed at the top of the fuselage, preferably at least partly above the cockpit. In a stall situation the top control surface is hence located in the reclining top of the fuselage and the top control surface can thereby contribute to the plane being recovered from the, unwanted, stall situation.

In a further advantageous embodiment according to the invention, at least two of the fuselage control surfaces form lateral control surfaces, which are disposed on the sides of the fuselage, preferably at least partly next to the cockpit, to enable the plane to be yawed, i.e., to be controlled to the right or left. By great preference, the fuselage comprises at least one lateral control surface on each side. As a result, these two fuselage control surfaces can serve as a kind of rudder.

By providing at least two lateral control surfaces which are each placed on a different side of the fuselage and are both placed at least partly at an underside of the fuselage, the at least two lateral control surfaces can be jointly utilized to pitch the plane, whereby in this case the front of the plane is moved up with respect to the center of gravity of the plane. As a result, these two fuselage control surfaces can therefore serve as a kind of bottom control surface.

In addition to the advantage of controlling the plane with the aid of the fuselage control surfaces during emergency situations, the use of a fuselage control surface can also lead to supplementary advantages during substantially normal flying conditions, for instance, in terms of stability.

By providing only three fuselage control surfaces, viz., one top control surface and two lateral control surfaces, which lateral control surfaces are preferably disposed at least partly at the underside of the fuselage, a relatively large extent of controllability of the plane can be obtained with a relatively small number of fuselage control surfaces. Thus, for instance, by using only the top control surface, or, conversely, by deploying both lateral control surfaces as bottom control surface, the plane can be made to pitch, i.e., move about its lateral axis. Also, for instance, the plane may be made to yaw by bringing a lateral control surface in its working position. What can be counteracted by then deploying the top control surface simultaneously with the lateral control surface, is that the nose of the plane is controlled up by the lateral control surface situated at least partly at the underside of the fuselage. So, the top control surface cancels out the effect of the lateral control surface undesirably starting to function partly as a bottom control surface.

When a single one or a plurality of fuselage control surfaces are placed at the rear of the fuselage, the fuselage control surface can comprise two lateral control surfaces which preferably possess a delta shape and can swivel out low on the fuselage on either side of the vertical stabilizer. This positioning in practice ensures an undisturbed airflow approach of the fuselage control surface in a deep stall flying condition.

The invention also relates to a flight simulator, a method for controlling a plane, and a method for simulatedly controlling a plane.

Furthermore, the invention relates to a computer program product for controlling a plane, and to a computer program product for simulatedly controlling a plane. A computer program product can comprise a set of computer-executable instructions, stored on a data carrier, such as a flash memory, a CD or a DVD. The set of computer-executable instructions enabling a programmable computer to carry out the above-mentioned method may also be available via downloading from a remote server, for example, via Internet.

Further advantageous embodiments of the invention are set forth in the subclaims. The invention will be further elucidated on the basis of an exemplary embodiment which is represented in the drawings. In the drawings:
Figure 1 shows a schematic perspective view of a commercial plane according to the invention;
Figure 2a shows a schematic cross section of a detail of the commercial plane of Fig. 1 with a first embodiment of a fuselage control surface in a rest position;
Figure 2b shows the schematic cross section of Fig. 2a with the fuselage control surface in a working position;
Figure 2c shows a schematic cross section of a detail of the commercial plane of Fig. 1 with a second embodiment of a fuselage control surface in a working position; and
Figure 3 shows a diagram including curves indicative of physical parameters associated with a fuselage control surface.

The drawing is only a schematic representation of a preferred embodiment of the invention. In the figures, the same or corresponding parts are indicated with the same or corresponding reference numerals.

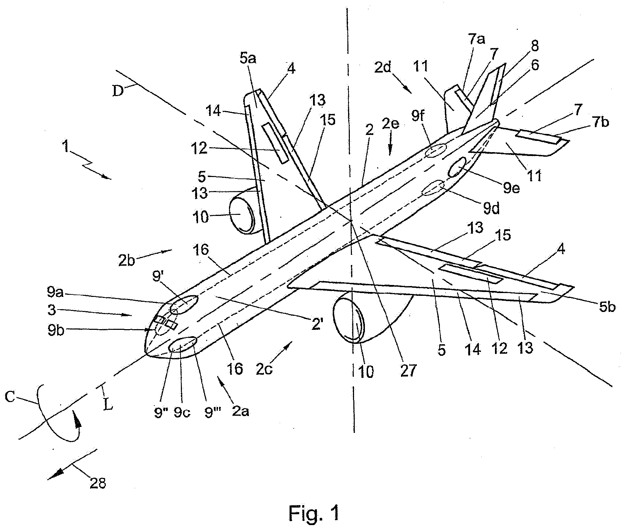

Figure 1 shows a schematic perspective view of a commercial plane 1 according to the invention. The commercial plane 1 comprises an elongate fuselage 2 with a cockpit 3 placed near a first, front end 2a of the fuselage. The first, front end 2a of the fuselage is also referred to as the nose of the plane. Further, the plane 1 has two wings 5 placed on opposite sides 2b, 2c of the fuselage 2 and provided with ailerons 4.

It is noted that wings are here understood to mean at least the main wings 5 which are intended to give the plane 1 the necessary lift to be able to fly. Here, the wings 5 are further provided with air brakes 12, also referred to as spoilers, and flaps 13, in the form of slats 14 and flaps 15. Alternatively, the wings 5 may go without the spoilers 12 and/or at least a part of the flaps 13. Additionally or alternatively, the wings may be provided with other, and/or a different number of, flaps.

The plane is configured to be able to fly in a flying direction. During normal flying conditions the flying direction 28 will be substantially parallel to the longitudinal axis of the plane, which preferably coincides substantially with the longitudinal axis L of the fuselage.

Preferably, the commercial plane 1 is provided with propelling means, such as propeller or jet propulsion means. The jet propulsion means can comprise one or a plurality of jet engines, such as conventional jet engines or turbofans. In the exemplary embodiment shown, the plane has two jet engines 10, each provided on a different wing 5. However, the plane 1 may also be provided with a different number of jet engines, for example, one, three, four, five or six jet engines. The invention is especially suitable for planes that have the propulsion at the rear on opposite sides of the fuselage, because this configuration is sensitive to deep stall flying conditions. It is noted that in principle a fuselage control surface can also be applied in planes with a different configuration, for instance, with the propulsion mounted on the wings.

Further, the plane 1 has a tail or empennage 6 situated near a second, rear end 2d of the fuselage 2. The empennage is provided with an elevator 7 and a rudder 8. The elevator 7 here consists of two interconnected elevator flaps 7a, 7b. Optionally, the empennage may be provided with propulsion means, such as a jet engine.

The plane 1 may additionally be provided with stabilizers, in the form of relatively small wings 11, which, as in the example shown, may be provided in the empennage 6 and which can take care of the stability of the plane about its lateral axis D. The lateral axis D of the plane 1 is an imaginary line passing horizontally through the center of gravity 27 of the plane. Preferably, the lateral axis runs substantially from a first wing tip 5a to a second wing tip 5b.

The fuselage 2 is here furthermore provided with three fuselage control surfaces 9 for controlling the commercial plane 1. Alternatively, the plane 1 may be provided with a different number of fuselage control surfaces, for example, one, two, four or five fuselage control surfaces 9. To be especially considered in this regard are fuselage control surfaces at the tail end of the fuselage of the plane. The plane has at least one fuselage control surface 9 which is adjustable between a neutral rest position and a working position in which the fuselage control surface 9 extends away from the fuselage 2. In the example shown, the three fuselage control surfaces 9 are each in their rest position, and in the rest position they extend substantially in line with the fuselage 2. This is to say that an outer surface 9' of the fuselage control surface in its rest position is substantially in the same imaginary plane as an outer surface of the fuselage. The outer surfaces mentioned here jointly form a substantially aerodynamically shaped interface.

That a fuselage control surface 9 is in the rest position means that the fuselage control surface does not extend, or hardly extends, away from the fuselage. If the fuselage control surface in its rest position is outside the fuselage, it may be spaced from the local fuselage surface and extend substantially parallel to the local fuselage surface. Preferably, however, the fuselage control surface in the rest position does not project, or hardly projects, outside the outer surface of the fuselage 2. Thus, the fuselage control surface in its neutral rest position, as in the example shown, can extend in line with the fuselage, or the fuselage control surface in its rest position may be situated inside the fuselage 2.

In the example shown, one fuselage control surface 9 constitutes a top control surface 9a which is disposed at the top 2e of the fuselage. Here, the top control surface 9a is placed partly above the cockpit 3. Preferably, a top control surface, seen in the circumferential direction C of the fuselage 2, is provided centrally above the fuselage.

In the embodiment shown, two of the fuselage control surfaces constitute lateral control surfaces 9b, 9c which are disposed on the sides 2b, 2c of the fuselage. Here, the lateral control surfaces 9b, 9c are disposed partly next to the cockpit 3. Alternatively, the lateral control surfaces may be disposed forward of, wholly next to, or behind the cockpit 3.

The lateral control surfaces 9b, 9c are here disposed partly at the underside of the fuselage, but, conversely, may also be situated more at the top 2e of the fuselage. Also, the location of a lateral control surface may be such that it is not inclined up or down anymore, but is situated substantially near a widest part of a cross section of the elongate fuselage.

In the embodiment shown, the lateral control surfaces 9b, 9c may jointly serve as bottom control surface. However, additionally or alternatively, also a single one or a plurality of bottom control surfaces may be provided substantially straight under the fuselage, preferably at least partly under the cockpit 3.

Although the fuselage control surfaces 9 are here disposed near the cockpit 3, they may also be provided elsewhere. A fuselage control surface 9 may be placed, for example, behind the cockpit 3, as, for instance, between the cockpit 3 and the wings 5, substantially at the wings, or between the wings 5 and the tail 6. Preferably, the fuselage control surface is placed at a relatively large distance from the center of gravity 27 of the plane, viewed in the longitudinal direction 28 of the fuselage. This applies to fuselage control surfaces at the cockpit 3 as well as at the tail 6. As a result, a force exerted on the fuselage control surface 9 has a relatively long arm and this force can exert a relatively large moment on the plane.

Here, the commercial plane comprises only one top control surface 9a and two lateral control surfaces 9b, 9c. Preferably, fuselage control surfaces, as is also the case here with the three fuselage control surfaces 9a, 9b, 9c shown, are substantially uniformly distributed over the circumference, viewed in the circumferential direction C. This is to say that the fuselage control surfaces are then substantially equidistantly spaced, viewed in circumferential direction. Accordingly, seen from the front of the fuselage, there is approximately 120° between the centers of the three fuselage control surfaces. However, the lateral control surfaces 9b, 9c may alternatively be placed lower, or higher, and then there may be, for instance, approximately 90°, 140°, or 150° between the center of the top control surface 9a and the center of a lateral control surface 9b, 9c.

Alternatively, a different number than three fuselage control surfaces may be distributed approximately uniformly. Thus, two fuselage control surfaces may be spaced apart approximately 180° in circumferential direction C and hence may be situated, for example, approximately next to each other or straight above each other. Alternatively, for example, four or five fuselage control surfaces may be arranged, viewed in circumferential direction, with their centers spaced apart approximately 90° and approximately 72°, respectively.

It is noted that at least a part of the possibly uniformly circumferentially distributed fuselage control surfaces may be mutually offset viewed in the longitudinal direction 28 of the fuselage 2.

In the example shown, the fuselage control surface is substantially plate form. The fuselage control surface which is here thus formed substantially as a plate or sheet has an outer surface 9a' and an inner surface 9a" and has substantially a thickness 30 that is relatively small with respect to its other dimensions. Here, the fuselage control surface is substantially double-curved in order for the outer surface of the fuselage control surface to properly adjoin the double-curved fuselage surface near the cockpit 3. Alternatively, a fuselage control surface may be substantially single-curved, for instance, when this fuselage control surface is placed near a substantially circular-cylindrical fuselage surface, or may be substantially uncurved, for instance, when the fuselage control surface is a fuselage control surface that is slidable out of the fuselage.

Further, the fuselage control surface here has a substantially oval principal shape. However, a fuselage control surface may also have a different principal shape, for example, a substantially elliptical, rectangular or triangular principal shape, which may or may not be rounded. It is noted that the fuselage control surfaces of a single plane may differ in shape and/or size. Thus, lateral control surfaces 9b, 9c may for instance be smaller than a top control surface 9a, or the other way around.

An outer surface 9' of the fuselage control surface is preferably so shaped that the fuselage control surface in the rest position forms a portion of the outer surface of the fuselage. This is to say, therefore, that the fuselage control surface is a kind of flap or closing piece which in its rest position is in a corresponding opening in an outer surface of the fuselage. Accordingly, the outer surface of the fuselage control surface then coincides with the outer surface 2', also referred to as skin, of the fuselage, so that the outer face 9' of the fuselage control surface 9 substantially merges with the aerodynamically shaped fuselage 2. In other words, a portion of the skin of the plane can be used as fuselage control surface, by arranging for this portion of the skin to be movable relative to the fuselage. Preferably, this portion of the skin is strengthened, for instance, with the aid of strengthening ribs. Preferably, in the rest position of the fuselage control surface there is only a relatively small seam between the outer surface of the fuselage control surface and the outer surface of the fuselage, so that the outer surface of the fuselage control surface adjoins the outer surface of the fuselage relatively closely. Optionally, an outer edge of the fuselage control surface and/or an edge of the corresponding opening in the fuselage skin is provided with sealing means, such as bristles or an elastically deformable sealing ring.

The embodiment as shown in Figure 1 moreover has three fuselage control surfaces 9d, e, f near the rear end of the fuselage 2. This concerns a bottom control surface 9d, at the underside of the fuselage 2, a left lateral control surface 9e and a right lateral control surface 9f.. It is noted that the plane can also be designed without fuselage control surfaces at the rear of the fuselage. Also, a plane may be provided with one fuselage control surface or a plurality of fuselage control surfaces which are all situated at the rear of the fuselage.

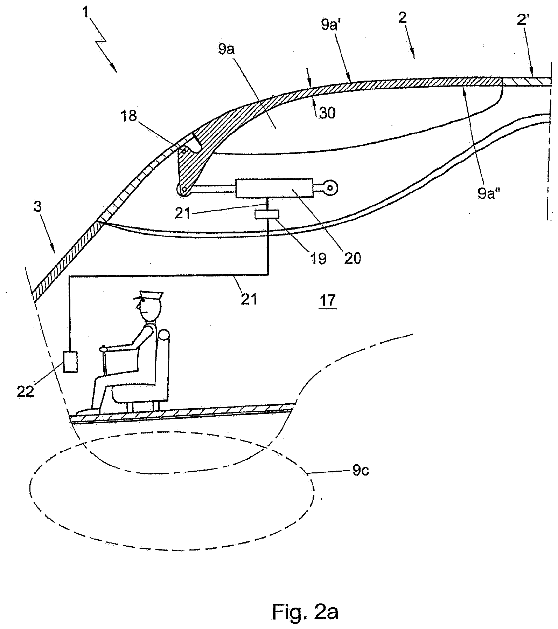

Fig. 2a shows a schematic cross section of a detail of the commercial plane 1 of Fig. 1 with a fuselage control surface according to a first embodiment. In the cross section the plane 1 is sectioned along the vertical plane, when, for example, the plane is parked, in the longitudinal direction 28 of the plane 1. This vertical plane is schematically represented in Fig. 1 with a broken line 16. In Fig. 2a the top control surface 9a can be seen in cross section. The top control surface 9a is here in the rest position. An outer surface 9a' of the fuselage control surface is in line with the outer surface 2' of the fuselage and so does not project outside it.

In the example shown, the adjustable fuselage control surface is of folding design and the adjustable fuselage control surface is hingedly mounted about a hinge pin 18 and the adjustable fuselage control surface has one degree of freedom. Alternatively or additionally, the fuselage control surface is slidable. The fuselage control surface is, for example, movable by a combination of sliding and hinging, which movement can take place along a one-dimensional path. Alternatively, the adjustment of the fuselage control surface 9 can have more than one degree of freedom. The fuselage control surface can, for example, be hingeable about a ball joint. When the adjustment has, for example, two or three degrees of freedom, the fuselage control surface can be used relatively simply to allow the plane to yaw and/or roll. Thus, for instance, a top control surface, in addition to being configured to slide or fold in the vertical plane extending in the longitudinal direction 28 of the plane, may also be sidewardly pivotable with respect to the vertical plane mentioned. When the top control surface mentioned is in the working position, and hence in a folded-out or slid-out position, the orientation of this top control surface can be adapted, for instance, by pivoting the top control surface to the left in order to have the plane yaw to the right.

In an embodiment (not shown), one or more of the fuselage control surfaces 9 may be slidably configured. The fuselage control surface can then be slid out of the fuselage 2 of the plane 1, for instance, along a straight plane or along a curved plane. Preferably, the slide-out distance of the fuselage control surface is adjustable.

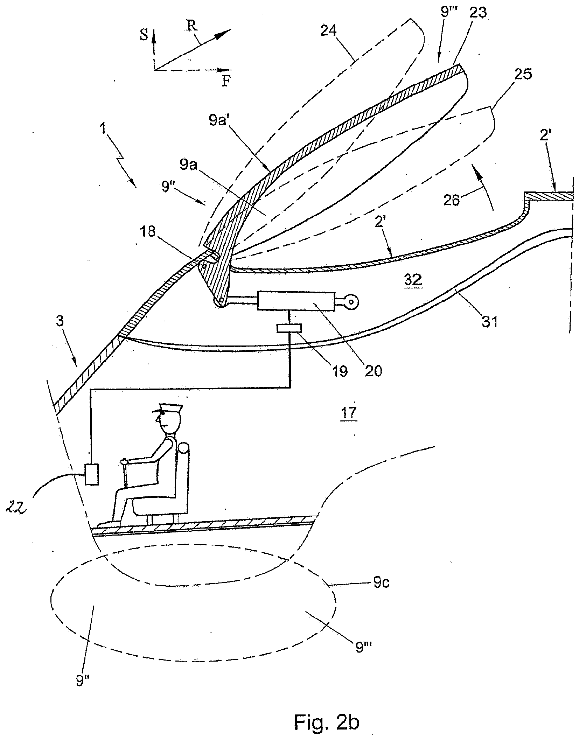

Fig. 2b shows the schematic cross section of Fig. 2a with the top control surface 9b in a first working position 23. Here, the fuselage control surface is adjustable between the rest position and a plurality of working positions 23, 24, 25. As the fuselage control surface in the first working position 23 is folded out and influences air currents around the plane 1, the plane 1 can pitch precipitately about its lateral axis D. As is represented with broken lines, the fuselage control surface 9a may here be moved further outwards into a further working position 24, for instance, for stronger control of the plane, or, conversely, the fuselage control surface may be in a working position 25 folded out less far.

Preferably, the fuselage control surface 9 in the working position extends substantially in a direction R away from the fuselage, which direction has a first directional component F running substantially parallel to a longitudinal axis L of the fuselage, from the front side of the fuselage towards the rear side of the fuselage, and which direction R has a second directional component S which extends radially outwards away from the fuselage 2.

Furthermore, a hinge point 18 of the fuselage control surface may be near a front end 9" of the fuselage control surface 9. The fuselage control surface can then fold out from the rest position to the working position by folding a rear end 9'" in one tilting movement 26 forwards and away from the fuselage.

Further, the fuselage control surface is preferably adjustable, from a working position in which the fuselage control surface extends relatively little away from the fuselage to an extreme working position in which the fuselage control surface extends relatively far away from the fuselage, more preferably via several intermediate working positions. More preferably, the fuselage control surface is steplessly adjustable, but alternatively adjustability may proceed stepwise. Preferably, each of a plurality of working positions is in a range extending from the rest position of the fuselage control surface through to an extreme position of the fuselage control surface in which the fuselage control surface extends at a maximum with respect to the fuselage.

Optionally, the fuselage control surface may also be changed in form, preferably while the fuselage control surface is in the working position. To this end, the fuselage control surface may be provided, for example, with flaps which fold out and/or with slides which can slide in and/or out, to enlarge and/or reduce the area and/or to change the form of the fuselage control surface 9 in order to influence the course of air currents around the fuselage control surface.

In the example shown in Fig. 2b, the fuselage control surface is pneumatically adjustable, with the aid of an actuator 20 in the form of a pneumatic cylinder 20. Alternatively, the fuselage control surface is adjustable in a different manner, for example, manually and/or with a hydraulic or electromechanically actuator.

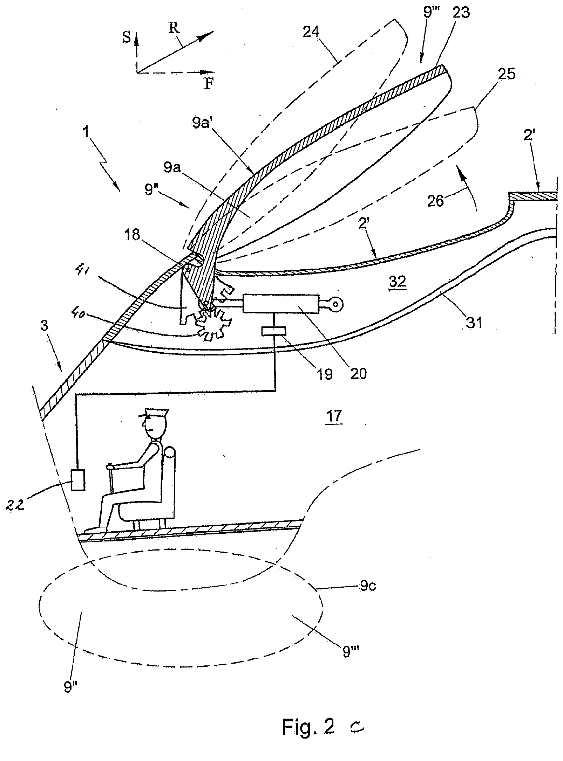

Fig. 2c shows a schematic cross section of a detail of the commercial plane of Fig. 1 with a second embodiment of a fuselage control surface in a working position. Here, the fuselage control surface is not only adjustable with the aid of the actuator 20 of the embodiment shown in Fig. 2a, also by means of a manually operable actuator. The manually operable actuator includes a sprocket wheel 40 cooperating with a gear rack 41 that is provided on the fuselage control surface 9. The sprocket wheel 40 rotates by driving a manually drivable mechanism (not shown), e.g. a rotating axle. Then, the position of the fuselage control surface 9 can be adjusted by driving the manually drivable mechanism, even if the pneumatic cylinder 20 is out of operation. It is noted that also other manually operable actuators can be implemented, e.g. using a cylinder mechanism or a lever construction, especially for actuating a fuselage control surface at a rear side of the plane. Further, instead of applying a dual actuator constructions, as described above, in principle, the pneumatic actuator 20 can be omitted. Then, the fuselage control surface 9 is only adjustable by the manually drivable mechanism.

According to a further aspect, the fuselage control surface 9 can be secured in a particular state, e.g. at least in a working position or in a rest position. Then, the occurrence of uncontrolled adjustments of the fuselage control surface 9, e.g. due to sudden movements of the plane or air turbulence, are counteracted, as well as associated undesired aerodynamic behavior of the fuselage control surface. The position of said surface 9 can be blocked using the at least one actuator 20, 40 controlling adjustment of the surface 9 and/or using a separate blocking mechanism.

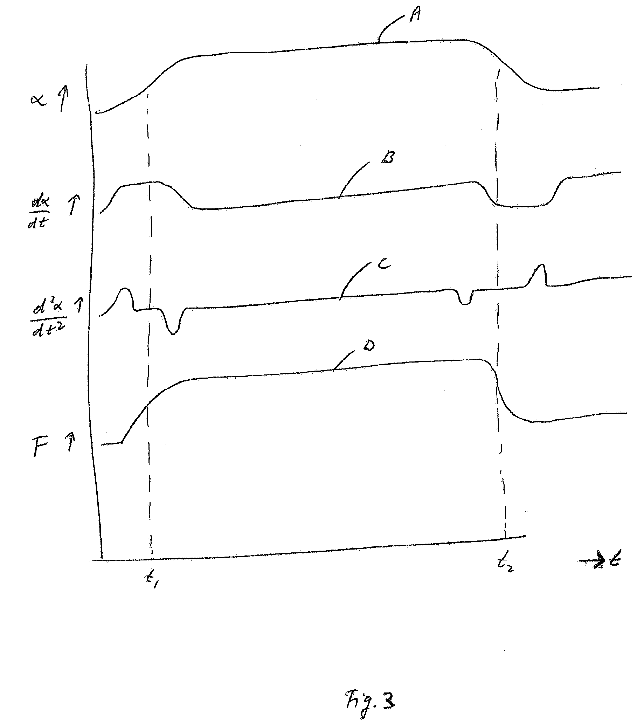

Figure 3 shows a diagram including curves indicative of physical parameters associated with a fuselage control surface. The diagram includes a first curve A depicting the orientation alpha of the fuselage control surface as a function of time t. At a first time instant ti, the surface is brought from a rest position into a working position. Then, at a second time instant t₂, the surface is brought back into the rest position. The diagram includes a second curve B depicting the first time derivative of the orientation alpha of the fuselage control surface. Similarly, a third curve C depicts the second derivative of the orientation alpha of the fuselage control surface. Further, a fourth curve D depicts the force F that is exerted on the fuselage control surface. The first, second, third and fourth curve A-D are a function of the same time parameter t, at corresponding time instants.

Furthermore, the commercial plane 1 in the examples shown comprises a pressurized cabin 17 and the fuselage control surface 9 is disposed outside the pressurized cabin 17. In the example shown, the pressurized cabin 17 is separated, with the aid of a partition 31, from a part 32 of the fuselage located outside the pressurized cabin. This can prevent the possibility that when the fuselage control surface is in its working position the pressure in the pressurized cabin decreases or drops out unintentionally. Preferably, in case the plane 1 has several fuselage control surfaces, all fuselage control surfaces are disposed outside the pressurized cabin. Alternatively, only a part of the fuselage control surfaces is disposed outside the pressurized cabin.

Here, the plane 1 furthermore has a control unit 19 for controlling the position and/or orientation of the fuselage control surface, such as the extent to which the fuselage control surface extends away from the fuselage 2. The control unit can comprise a computer (not shown) and/or one sensor or a plurality of sensors to automate the control of the fuselage control surface at least partly. Alternatively, the control unit may be, for example, of a mechanical nature. The control unit 19 is here disposed outside the pressurized cabin 17 and is connected via communication channels 21 with the actuator 20 and with an operating element 22 placed in the cockpit 3. Alternatively or additionally, an operating element may be provided elsewhere in the plane, for example, in a cargo hold and/or on the main deck or the upper deck, or the operating element may even be omitted.

Optionally, the control unit 19 may furthermore be configured to deform the fuselage control surface and/or to adjust the position of the fuselage control surface in several directions, for instance, to have the plane yaw and/or roll.

The invention further relates to a flight simulator. The flight simulator comprises, simulatedly, an elongate fuselage with a cockpit placed near a first, front end of the fuselage, two wings placed on opposite sides of the fuselage, provided with ailerons, and a tail located near a second, rear end of the fuselage, which is provided with an elevator and a rudder, wherein the fuselage is furthermore provided with at least one adjustable fuselage control surface for controlling the subsonic plane, wherein the fuselage control surface is adjustable between a neutral rest position and at least one working position in which the fuselage control surface extends away from the fuselage.

Optionally, the flight simulator may be arranged to simulate one or more of the features of the above-described embodiments of the plane 1 and/or the fuselage control surface 9.

The invention further relates to a method for actually or simulatedly controlling a subsonic plane 1 provided with an elongate fuselage with a cockpit placed near a first, front end of the fuselage, two wings placed on opposite sides of the fuselage, provided with ailerons, and a tail located near a second, rear end of the fuselage, which is provided with an elevator and a rudder, wherein the fuselage is furthermore provided with at least one adjustable fuselage control surface for controlling the subsonic plane, wherein the fuselage control surface is adjustable between a neutral rest position and at least one working position in which the fuselage control surface extends away from the fuselage. The method comprises the step of actually or simulatedly adjusting at least one adjustable fuselage control surface 9 which is adjustable between a neutral rest position and at least one working position in which the fuselage control surface 9 extends away from the fuselage 2. It is noted that this method., of course, takes place during actual or simulated flying. A pilot or other crew member of the plane, for instance, if he cannot recover the plane from a stall condition with the normal means anymore, can bring the fuselage control surface 9 into a working position. After the plane 1 has been restored to a normal flying condition again, the fuselage control surface can be returned into the rest position again, so as not to adversely affect the air resistance of the plane during the rest of the flight.

In this respect the fuselage control surface may serve as a redundancy surface to enable recovery, independently of pitch control performed by horizontal stabilizer wings on the tail of the plane. The redundancy surface may operate during specific aerodynamic conditions and/or when other pitch control structures do not function properly, e.g. due to damage or internal mechanical disruption. By implementing an adjustable fuselage control surface, the plane is more responsive to control activities performed by pilots, thus rendering flight behaviour inherently safer, also in extraordinary flight conditions.

It is noted that actual or simulated control of a plane with the aid of the fuselage control surface 9 need not be limited to stall or other emergency situations. Thus, controlling the plane with the aid of the fuselage control surface may also be advantageous during relatively normal flying conditions. Thus, with the aid of one or a plurality of fuselage control surfaces, for example, the induced resistance can be reduced and/or circumfused surfaces of tail control surfaces of the empennage can be reduced, thereby reducing fuel.

Alternatively or additionally, by introducing an excentric force with the aid of the fuselage control surface the center of gravity range of the plane can be enlarged or its dynamic stability can be improved, thereby improving static and/or dynamic stability and safety of the plane during flight, e.g. during regular flight conditions and/or during landing and/or take off. Thus a resilience function is incorporated. More variations in the load profile of the plane are allowable while maintaining predefined stability requirements during flight of the plane, thereby relaxing a strict relation between the location of the aerodynamic central point and the gravity profile of the plane. The use of a fuselage control surface may further at least partially replace functionality of traditional structures on the plane, such as static and/or deformable portions on the wings and/or tail, thereby meeting a desire to reduce or even eliminate complex structures on the wings and/or tail of the plane.

The invention furthermore relates to a computer program product for actually or simulatedly controlling a subsonic plane provided with an elongate fuselage with a cockpit placed near a first, front end of the fuselage, two wings placed on opposite sides of the fuselage, provided with ailerons, and a tail located near a second, rear end of the fuselage, which is provided with an elevator and a rudder, wherein the fuselage is furthermore provided with at least one adjustable fuselage control surface for controlling the subsonic plane, wherein the fuselage control surface is adjustable between a neutral rest position and at least one working position in which the fuselage control surface extends away from the fuselage. The computer program product is intended for a computer and is designed to have a computer carry out a method, which method comprises the step of adjusting at least one adjustable fuselage control surface 9 to control a commercial plane 1, wherein the fuselage control surface 9 is adjusted between a neutral rest position and at least one working position in which the fuselage control surface extends away from the fuselage 2.

The method for actually or simulatedly controlling a subsonic plane with an elongate fuselage may be carried out by utilizing dedicated hardware structures, such as FPGA and/or ASIC components. Also, the method may be carried out at least partly by utilizing a computer program product which comprises instructions to have a processor of a computer system carry out the above-described steps, or a number of the steps described. All steps may in principle be carried out on a separate processor, for instance, the step of controlling an actuator which adjusts the fuselage control surface. In addition, a plurality of processors may be charged with carrying out the above-described step or steps. The step of adjusting the fuselage control surface is preferably performed based on measurement data, e.g. data that is available from sensors sensing flight conditions of the plane.Further, the adjusting step can be controlled by a central computer of the plane and can be displayed as an additional function, e.g. with a flight management system. Further, the adjusting step can be controlled by a backup computer or by a separate computer. The invention is not limited to the exemplary embodiments described here. Many variants are possible.

Instead of having a smooth surface, the fuselage control surface can also have an outer surface provided with a relief. Thus, the fuselage control surface may be provided with, for example, air guiding ribs, a corrugated or studded profile and/or with a different relief.

Furthermore, the fuselage control surface may also be provided with a one-time emergency actuator, such as an explosive charge or a biased spring, for bringing the fuselage control surface from the rest position into the, preferably extreme, working position. By, for instance, removing a catch, a biased spring may be unlocked, as a result of which the biased spring brings the fuselage control surface into the working position. When in an emergency, for instance, the engines of the plane have dropped out and there is no electrical supply available either, the fuselage control surface may still be brought into the working position relatively fast and easily with the emergency actuator, for instance, to recover the plane from a stall condition.

It will be clear that each element of the fuselage control surfaces shown and described and each element of the planes shown and described is also understood to have been separately described and shown and may also be used individually and/or may be used in combination with at least one other element and is understood be described herein as such.

It is noted that the adjustable fuselage control surface according to the invention can not only be applied to a commercial plane, but also to another subsonic plane, such as a glider.

These and other variants will be clear to those skilled in the art and are understood to be within the purview of the invention, as set forth in the following claims.

## Claims

1. A subsonic plane (1), comprising an elongate fuselage (2) having a longitudinal axis (L) with a cockpit (3) placed near a first, front end (2a) of the fuselage (2), two wings (5) placed on opposite sides of the fuselage (2), provided with ailerons (4), and a tail (6) located near a second, rear end (2d) of the fuselage (2), which is provided with an elevator (7) and a rudder (8), wherein the fuselage (2) is furthermore provided with at least one adjustable fuselage control surface (9) for controlling the subsonic plane (1) to enable recovery, wherein the fuselage control surface (9) is disposed near the cockpit (3) and is adjustable being hingeable around a hinge axis lateral to the longitudinal axis (L) of the elongate fuselage (2) or slidable out of the fuselage (2) between a neutral rest position and at least one working position (23, 24, 25) in which the fuselage control surface (9) extends away from the fuselage (2),
furthermore comprising a control unit (19) for controlling the position and/or orientation of the fuselage control surface (9), wherein the control unit (19) preferably comprises a computer, for pitch control of the subsonic plane (1) for recovering the plane (1) from a deep stall condition, a stall condition or another specific aerodynamic condition to a normal flying condition, and/or for improving static and/or dynamic stability and safety of the plane (1) during flight, such as during regular flight conditions and/or during landing and/or take off.

2. A plane according to claim 1, wherein the control unit comprises a single or a multiple number of sensors to automate the control of the fuselage control surface (9) at least partly.

3. A plane according to claim 1 or 2, wherein a fuselage control surface (9) is disposed near the rear end (2d) of the fuselage (2).

4. A plane according to claim 1, 2 or 3, wherein the fuselage control surface (9) in the rest position forms a portion of the outer surface (2') of the fuselage (2).

5. A plane according to any one of the preceding claims, comprising a plurality of fuselage control surfaces (9).

6. A plane according to any one of the preceding claims, wherein at least one fuselage control surface (9) forms a top control surface (9a) which is disposed at the top (2e) of the fuselage (2), preferably at least partly above the cockpit (3).

7. A plane according to any one of the preceding claims, wherein at least two of the fuselage control surfaces (9) form lateral control surfaces (9b, 9c) which are disposed on the sides of the fuselage, preferably at least partly next to the cockpit (3).

8. A plane according to claim 7, wherein the lateral control surfaces (9b, 9c) are disposed at least partly at the underside of the fuselage (2), preferably at least partly under the cockpit (3).

9. A plane according to any one of the preceding claims, wherein at least one fuselage control surface (9) forms a bottom control surface (9e) which is disposed at least partly at an underside of the fuselage (2), preferably at least partly under the cockpit (3) or the rear end (2d) of the fuselage (2).

10. A plane according to any one of the preceding claims, wherein the fuselage control surfaces (9) comprise only one top control surface (9a) and two lateral control surfaces (9b, 9c).

11. A computer program product comprising instructions which, when the program is executed by a computer, cause the computer to control a subsonic plane (1) provided with an elongate fuselage (2) having a longitudinal axis (L) with a cockpit (3) placed near a first, front end (2a) of the fuselage (2), two wings (5) placed on opposite sides of the fuselage (2), provided with ailerons (4), and a tail (6) located near a second, rear end (2d) of the fuselage (2), which is provided with an elevator (7) and a rudder (8), wherein the fuselage (2) is furthermore provided with at least one adjustable fuselage control surface (9) for controlling the subsonic plane (1) to enable recovery, wherein the fuselage control surface (9) is disposed near the cockpit (3) and is adjustable being hingeable around a hinge axis lateral to the longitudinal axis (L) of the elongate fuselage (2) or slidable out of the fuselage (2) between a neutral rest position and at least one working position (23, 24, 25) in which the fuselage control surface (9) extends away from the fuselage (2), wherein the computer program product comprises a computer readable code to have a processor carry out the step of adjusting the at least one adjustable fuselage control surface (9), and the step of controlling the position and/or orientation of the fuselage control surface (9), for pitch control of the subsonic plane (1) for recovering the plane (1) from a deep stall condition, a stall condition or another specific aerodynamic condition to a normal flying condition, and/or for improving static and/or dynamic stability and safety of the plane (1) during flight, such as during regular flight conditions and/or during landing and/or take off.

12. A method for controlling a subsonic plane (1) provided with an elongate fuselage (2) having a longitudinal axis (L) with a cockpit (3) placed near a first, front end (2a) of the fuselage (2), two wings (5) placed on opposite sides of the fuselage (2), provided with ailerons (4), and a tail (6) located near a second, rear end (2d) of the fuselage (2), which is provided with an elevator (7) and a rudder (8), wherein the fuselage (2) is furthermore provided with at least one adjustable fuselage control surface (9) for controlling the subsonic plane (1) to enable recovery, wherein the fuselage control surface (9) is disposed near the cockpit (3) and is adjustable being hingeable around a hinge axis lateral to the longitudinal axis (L) of the elongate fuselage (2) or slidable out of the fuselage (2) between a neutral rest position and at least one working position (23, 24, 25) in which the fuselage control surface (9) extends away from the fuselage (2), wherein the method comprises the step of adjusting the at least one adjustable fuselage control surface (9), further comprising the step of controlling the position and/or orientation of the fuselage control surface (9), preferably using a computer, for pitch control of the subsonic plane (1) for recovering the plane (1) from a deep stall condition, a stall condition or another specific aerodynamic condition to a normal flying condition, and/or for improving static and/or dynamic stability and safety of the plane (1) during flight, such as during regular flight conditions and/or during landing and/or take off.

13. A simulator of a subsonic plane (1), simulatedly comprising an elongate fuselage (2) having a longitudinal axis (L) with a cockpit (3) placed near a first, front end (2a) of the fuselage (2), two wings (5) placed on opposite sides of the fuselage (2), provided with ailerons (4), and a tail (6) located near a second, rear end (2d) of the fuselage (2), which is provided with an elevator (7) and a rudder (8), wherein the fuselage (2) is furthermore provided with at least one adjustable fuselage control surface (9) for controlling the subsonic plane (1) to enable recovery, wherein the fuselage control surface (9) is disposed near the cockpit (3) and is adjustable being hingeable around a hinge axis lateral to the longitudinal axis (L) of the elongate fuselage (2) or slidable out of the fuselage (2) between a neutral rest position and at least one working position (23, 24, 25) in which the fuselage control surface (9) extends away from the fuselage (2), furthermore comprising a control unit (19) for simulatedly controlling the position and/or orientation of the fuselage control surface (9), wherein the control unit (19) preferably comprises a computer, for pitch control of the subsonic plane (1) for recovering the plane (1) from a deep stall condition, a stall condition or another specific aerodynamic condition to a normal flying condition, and/or for improving static and/or dynamic stability and safety of the plane (1) during flight, such as during regular flight conditions and/or during landing and/or take off.

14. A computer program product comprising instructions which, when the program is executed by a computer, cause the computer to simulatedly control a subsonic plane (1) provided with an elongate fuselage (2) having a longitudinal axis (L) with a cockpit (3) placed near a first, front end (2a) of the fuselage (2), two wings (5) placed on opposite sides of the fuselage (2), provided with ailerons (4), and a tail (6) located near a second, rear end (2d) of the fuselage (2), which is provided with an elevator (7) and a rudder (8), wherein the fuselage (2) is furthermore provided with at least one adjustable fuselage control surface (9) for controlling the subsonic plane (1) to enable recovery, wherein the fuselage control surface (9) is disposed near the cockpit (3) and adjustable being hingeable around a hinge axis lateral to the longitudinal axis (L) of the elongate fuselage (2) or slidable out of the fuselage (2) between a neutral rest position and at least one working position (23, 24, 25) in which the fuselage control surface (9) extends away from the fuselage (2), wherein the computer program product comprises a computer readable code to have a processor carry out the step of simulatedly adjusting the at least one adjustable fuselage control surface (9), and the step of simulatedly controlling the position and/or orientation of the fuselage control surface (9), for pitch control of the subsonic plane (1) for recovering the plane from a deep stall condition, a stall condition or another specific aerodynamic condition to a normal flying condition, and/or for improving static and/or dynamic stability and safety of the plane (1) during flight, such as during regular flight conditions and/or during landing and/or take off.

15. A method for simulatedly controlling a subsonic plane (1) provided with an elongate fuselage (2) having a longitudinal axis (L) with a cockpit (3) placed near a first, front end (2a) of the fuselage (2), two wings (5) placed on opposite sides of the fuselage (2), provided with ailerons (4), and a tail (6) located near a second, rear end (2d) of the fuselage (2), which is provided with an elevator (7) and a rudder (8), wherein the fuselage (2) is furthermore provided with at least one adjustable fuselage control surface (9) for controlling the subsonic plane (1) to enable recovery, wherein the fuselage control surface (9) is disposed near the cockpit (3) and is adjustable being hingeable around a hinge axis lateral to the longitudinal axis (L) of the elongate fuselage (2) or slidable out of the fuselage (2) between a neutral rest position and at least one working position (23, 24, 25) in which the fuselage control surface (9) extends away from the fuselage (2), wherein the method comprises the step of simulatedly adjusting the at least one adjustable fuselage control surface (9), further comprising the step of simulatedly controlling the position and/or orientation of the fuselage control surface (9), preferably using a computer, for pitch control of the subsonic plane (1) for recovering the plane (1) from a deep stall condition, a stall condition or another specific aerodynamic condition to a normal flying condition, and/or for improving static and/or dynamic stability and safety of the plane (1) during flight, such as during regular flight conditions and/or during landing and/or take off.

## Patentansprüche

1. Unterschall-Luftfahrzeug (1), umfassend einen länglichen Rumpf (2) mit einer Längsachse (L), wobei ein Cockpit (3) in der Nähe eines ersten vorderen Endes (2a) des Rumpfes (2) angeordnet ist, zwei Flügel (5) an gegenüberliegenden Seiten des Rumpfes (2) angeordnet sind, die mit Querrudern (4) versehen sind, und sich ein Heck (6) in der Nähe eines zweiten hinteren Endes (2d) des Rumpfes (2) befindet, das mit einem Höhenruder (7) und einem Ruder (8) versehen ist, wobei der Rumpf (2) ferner mit wenigstens einer einstellbaren Rumpfsteuerfläche (9) zum Steuern des Unterschall-Luftfahrzeugs (1) versehen ist, um eine Rückführung zu ermöglichen, wobei die Rumpfsteuerfläche (9) in der Nähe des Cockpits (3) angeordnet ist und einstellbar ist, wobei sie um eine Scharnierachse seitlich der Längsachse (L) des länglichen Rumpfes (2) geschwenkt oder zwischen einer neutralen Ruheposition und wenigstens einer Arbeitsposition (23, 24, 25), in der sich die Rumpfsteuerfläche (9) weg von dem Rumpf (2) erstreckt, aus dem Rumpf (2) herausgeschoben werden kann,
ferner umfassend eine Steuereinheit (19) zum Steuern der Position und/oder Ausrichtung der Rumpfsteuerfläche (9), wobei die Steuereinheit (19) vorzugsweise einen Computer zur Steigungssteuerung des Unterschall-Luftfahrzeugs (1) zur Rückführung des Flugzeugs (1) von einem tiefen Stall-Zustand, einem Stall-Zustand oder einem anderen spezifischen aerodynamischen Zustand zu einem normalen Flugzustand und/oder zur Verbesserung der statischen und/oder dynamischen Stabilität und Sicherheit des Flugzeugs (1) während des Fluges, zum Beispiel während regulärer Flugzustände und/oder während der Landung und/oder des Starts umfasst.

2. Flugzeug nach Anspruch 1, wobei die Steuereinheit einen einzelnen oder mehrere Sensoren umfasst, um die Steuerung der Rumpfsteuerfläche (9) wenigstens teilweise zu automatisieren.

3. Flugzeug nach Anspruch 1 oder 2, wobei eine Rumpfsteuerfläche (9) in der Nähe des hinteren Endes (2d) des Rumpfes (2) angeordnet ist.

4. Flugzeug nach Anspruch 1, 2 oder 3, wobei die Rumpfsteuerfläche (9) in der Ruheposition einen Teil der Außenfläche (2') des Rumpfes (2) bildet.

5. Flugzeug nach einem der vorhergehenden Ansprüche, umfassend mehrere Rumpfsteuerflächen (9).

6. Flugzeug nach einem der vorhergehenden Ansprüche, wobei wenigstens eine Rumpfsteuerfläche (9) eine obere Steuerfläche (9a) bildet, die an der Oberseite (2e) des Rumpfes (2), vorzugsweise wenigstens teilweise über dem Cockpit (3) angeordnet ist.

7. Flugzeug nach einem der vorhergehenden Ansprüche, wobei wenigstens zwei der Rumpfsteuerflächen (9) seitliche Steuerflächen (9b, 9c) bilden, die an den Seiten des Rumpfes, vorzugsweise wenigstens teilweise neben dem Cockpit (3) angeordnet sind.

8. Flugzeug nach Anspruch 7, wobei die seitlichen Steuerflächen (9b, 9c) wenigstens teilweise an der Unterseite des Rumpfes (2), vorzugsweise wenigstens teilweise unter dem Cockpit (3) angeordnet sind.

9. Flugzeug nach einem der vorhergehenden Ansprüche, wobei wenigstens eine Rumpfsteuerfläche (9) eine untere Steuerfläche (9e) bildet, die wenigstens teilweise an einer Unterseite des Rumpfes (2), vorzugsweise wenigstens teilweise unter dem Cockpit (3) oder dem hinteren Ende (2d) des Rumpfes (2) angeordnet ist.

10. Flugzeug nach einem der vorhergehenden Ansprüche, wobei die Rumpfsteuerflächen (9) nur eine obere Steuerfläche (9a) und zwei seitliche Steuerflächen (9b, 9c) umfassen.

11. Computerprogrammprodukt, umfassend Befehle, die, wenn das Programm von einem Computer ausgeführt wird, bewirken, dass der Computer ein Unterschall-Luftfahrzeug (1) steuert, das mit einem länglichen Rumpf (2) mit einer Längsachse (L) versehen ist, wobei ein Cockpit (3) in der Nähe eines ersten vorderen Endes (2a) des Rumpfes (2) angeordnet ist, zwei Flügel (5) an gegenüberliegenden Seiten des Rumpfes (2) angeordnet sind, die mit Querrudern (4) versehen sind, und sich ein Heck (6) in der Nähe eines zweiten hinteren Endes (2d) des Rumpfes (2) befindet, das mit einem Höhenruder (7) und einem Ruder (8) versehen ist, wobei der Rumpf (2) ferner mit wenigstens einer einstellbaren Rumpfsteuerfläche (9) zum Steuern des Unterschall-Luftfahrzeugs (1) versehen ist, um eine Rückführung zu ermöglichen, wobei die Rumpfsteuerfläche (9) in der Nähe des Cockpits (3) angeordnet ist und einstellbar ist, wobei sie um eine Scharnierachse seitlich der Längsachse (L) des länglichen Rumpfes (2) geschwenkt oder zwischen einer neutralen Ruheposition und wenigstens einer Arbeitsposition (23, 24, 25), in der sich die Rumpfsteuerfläche (9) weg von dem Rumpf (2) erstreckt, aus dem Rumpf (2) herausgeschoben werden kann, wobei das Computerprogrammprodukt einen computerlesbaren Code umfasst, damit ein Prozessor den Schritt des Einstellens der wenigstens einen einstellbaren Rumpfsteuerfläche (9) und den Schritt des Steuerns der Position und/oder Ausrichtung der Rumpfsteuerfläche (9) zur Steigungssteuerung des Unterschall-Luftfahrzeugs (1) zur Rückführung des Flugzeugs (1) von einem tiefen Stall-Zustand, einem Stall-Zustand oder einem anderen spezifischen aerodynamischen Zustand zu einem normalen Flugzustand und/oder zur Verbesserung der statischen und/oder dynamischen Stabilität und Sicherheit des Flugzeugs (1) während des Fluges, zum Beispiel während regulärer Flugzustände und/oder während der Landung und/oder des Starts ausführt.

12. Verfahren zum Steuern eines Unterschall-Luftfahrzeugs (1), das mit einem länglichen Rumpf (2) mit einer Längsachse (L) versehen ist, wobei ein Cockpit (3) in der Nähe eines ersten vorderen Endes (2a) des Rumpfes (2) angeordnet ist, zwei Flügel (5) an gegenüberliegenden Seiten des Rumpfes (2) angeordnet sind, die mit Querrudern (4) versehen sind, und sich ein Heck (6) in der Nähe eines zweiten hinteren Endes (2d) des Rumpfes (2) befindet, das mit einem Höhenruder (7) und einem Ruder (8) versehen ist, wobei der Rumpf (2) ferner mit wenigstens einer einstellbaren Rumpfsteuerfläche (9) zum Steuern des Unterschall-Luftfahrzeugs (1) versehen ist, um eine Rückführung zu ermöglichen, wobei die Rumpfsteuerfläche (9) in der Nähe des Cockpits (3) angeordnet ist und einstellbar ist, wobei sie um eine Scharnierachse seitlich der Längsachse (L) des länglichen Rumpfes (2) geschwenkt oder zwischen einer neutralen Ruheposition und wenigstens einer Arbeitsposition (23, 24, 25), in der sich die Rumpfsteuerfläche (9) weg von dem Rumpf (2) erstreckt, aus dem Rumpf (2) herausgeschoben werden kann, wobei das Verfahren den Schritt des Einstellens der wenigstens einen einstellbaren Rumpfsteuerfläche (9) umfasst, ferner umfassend den Schritt des Steuerns der Position und/oder Ausrichtung der Rumpfsteuerfläche (9), vorzugsweise unter Verwendung eines Computers, zur Steigungssteuerung des Unterschall-Luftfahrzeugs (1) zur Rückführung des Flugzeugs (1) von einem tiefen Stall-Zustand, einem Stall-Zustand oder einem anderen spezifischen aerodynamischen Zustand zu einem normalen Flugzustand und/oder zur Verbesserung der statischen und/oder dynamischen Stabilität und Sicherheit des Flugzeugs (1) während des Fluges, zum Beispiel während regulärer Flugzustände und/oder während der Landung und/oder des Starts.

13. Simulator eines Unterschall-Luftfahrzeugs (1), simuliert umfassend einen länglichen Rumpf (2) mit einer Längsachse (L) mit einem Cockpit (3), das in der Nähe eines ersten vorderen Endes (2a) des Rumpfes (2) angeordnet ist, zwei Flügeln (5), die an gegenüberliegenden Seiten des Rumpfes (2) angeordnet sind, die mit Querrudern (4) versehen sind, und einem Heck (6), das sich in der Nähe eines zweiten hinteren Endes (2d) des Rumpfes (2) befindet, das mit einem Höhenruder (7) und einem Ruder (8) versehen ist, wobei der Rumpf (2) ferner mit wenigstens einer einstellbaren Rumpfsteuerfläche (9) zum Steuern des Unterschall-Luftfahrzeugs (1) versehen ist, um eine Rückführung zu ermöglichen, wobei die Rumpfsteuerfläche (9) in der Nähe des Cockpits (3) angeordnet ist und einstellbar ist, wobei sie um eine Scharnierachse seitlich der Längsachse (L) des länglichen Rumpfes (2) geschwenkt oder zwischen einer neutralen Ruheposition und wenigstens einer Arbeitsposition (23, 24, 25), in der sich die Rumpfsteuerfläche (9) weg von dem Rumpf (2) erstreckt, aus dem Rumpf (2) herausgeschoben werden kann, ferner umfassend eine Steuereinheit (19) zum simulierten Steuern der Position und/oder Ausrichtung der Rumpfsteuerfläche (9), wobei die Steuereinheit (19) vorzugsweise einen Computer zur Steigungssteuerung des Unterschall-Luftfahrzeugs (1) zur Rückführung des Flugzeugs (1) von einem tiefen Stall-Zustand, einem Stall-Zustand oder einem anderen spezifischen aerodynamischen Zustand zu einem normalen Flugzustand und/oder zur Verbesserung der statischen und/oder dynamischen Stabilität und Sicherheit des Flugzeugs (1) während des Fluges, zum Beispiel während regulärer Flugzustände und/oder während der Landung und/oder des Starts umfasst.

14. Computerprogrammprodukt, umfassend Befehle, die, wenn das Programm von einem Computer ausgeführt wird, bewirken, dass der Computer ein Unterschall-Luftfahrzeug (1) simuliert steuert, das mit einem länglichen Rumpf (2) mit einer Längsachse (L) versehen ist, wobei ein Cockpit (3) in der Nähe eines ersten vorderen Endes (2a) des Rumpfes (2) angeordnet ist, zwei Flügel (5) an gegenüberliegenden Seiten Seite des Rumpfes (2) angeordnet sind, die mit Querrudern (4) versehen ist, und sich ein Heck (6) in der Nähe eines zweiten hinteren Endes (2d) des Rumpfes (2) befindet, das mit einem Höhenruder (7) und einem Ruder (8) versehen ist, wobei der Rumpf (2) ferner mit wenigstens einer einstellbaren Rumpfsteuerfläche (9) zum Steuern des Unterschall-Luftfahrzeugs (1) versehen ist, um eine Rückführung zu ermöglichen, wobei die Rumpfsteuerfläche (9) in der Nähe des Cockpits (3) angeordnet ist und einstellbar ist, wobei sie um eine Scharnierachse seitlich der Längsachse (L) des länglichen Rumpfes (2) geschwenkt oder zwischen einer neutralen Ruheposition und wenigstens einer Arbeitsposition (23, 24, 25), in der sich die Rumpfsteuerfläche (9) weg von dem Rumpf (2) erstreckt, aus dem Rumpf (2) herausgeschoben werden kann, wobei das Computerprogrammprodukt einen computerlesbaren Code umfasst, damit ein Prozessor den Schritt des simulierten Einstellens der wenigstens einen einstellbaren Rumpfsteuerfläche (9) und den Schritt des simulierten Steuerns der Position und/oder Ausrichtung der Rumpfsteuerfläche (9) zur Steigungssteuerung des Unterschall-Luftfahrzeugs (1) zur Rückführung des Flugzeugs von einem tiefen Stall-Zustand, einem Stall-Zustand oder einem anderen spezifischen aerodynamischen Zustand zu einem normalen Flugzustand und/oder zur Verbesserung der statischen und/oder dynamischen Stabilität und Sicherheit des Flugzeugs (1) während des Fluges, zum Beispiel während regulärer Flugzustände und/oder während der Landung und/oder des Starts, ausführt.

15. Verfahren zum simulierten Steuern eines Unterschall-Luftfahrzeugs (1), das mit einem länglichen Rumpf (2) mit einer Längsachse (L) versehen ist, wobei ein Cockpit (3) in der Nähe eines ersten vorderen Endes (2a) des Rumpfes (2) angeordnet ist, zwei Flügel (5) an gegenüberliegenden Seiten des Rumpfes (2) angeordnet sind, die mit Querrudern (4) versehen ist, und sich ein Heck (6) in der Nähe eines zweiten hinteren Endes (2d) des Rumpfes (2) befindet, das mit einem Höhenruder (7) und einem Ruder (8) versehen ist, wobei der Rumpf (2) ferner mit wenigstens einer einstellbaren Rumpfsteuerfläche (9) zum Steuern des Unterschall-Luftfahrzeugs (1) versehen ist, um eine Rückführung zu ermöglichen, wobei die Rumpfsteuerfläche (9) in der Nähe des Cockpits (3) angeordnet ist und einstellbar ist, wobei sie um eine Scharnierachse seitlich der Längsachse (L) des länglichen Rumpfes (2) geschwenkt oder zwischen einer neutralen Ruheposition und wenigstens einer Arbeitsposition (23, 24, 25), in der sich die Rumpfsteuerfläche (9) weg von dem Rumpf (2) erstreckt, aus dem Rumpf (2) herausgeschoben werden kann, wobei das Verfahren den Schritt des simulierten Einstellens der wenigstens einen einstellbaren Rumpfsteuerfläche (9) umfasst, ferner umfassend den Schritt des simulierten Steuerns der Position und/oder Ausrichtung der Rumpfsteuerfläche (9), vorzugsweise unter Verwendung eines Computers, zur Steigungssteuerung des Unterschall-Luftfahrzeugs (1) zur Rückführung des Flugzeugs (1) von einem tiefen Stall-Zustand, einem Stall-Zustand oder einem anderen spezifischen aerodynamischen Zustand zu einem normalen Flugzustand und/oder zur Verbesserung der statischen und/oder dynamischen Stabilität und Sicherheit des Flugzeugs (1) während des Fluges, zum Beispiel während regulärer Flugzustände und/oder während der Landung und/oder des Starts.

## Revendications

1. Avion subsonique (1) comprenant un fuselage allongé (2) ayant un axe longitudinal (L) avec un cockpit (3) placé à proximité d'une première extrémité avant (2a) du fuselage (2), deux ailes (5) placées sur les côtés opposés du fuselage (2), pourvues d'ailerons (4), et une queue (6) située à proximité d'une deuxième extrémité arrière (2d) du fuselage (2), qui est pourvue d'une gouverne de profondeur (7) et d'une gouverne de direction (8), dans lequel le fuselage (2) est en outre pourvu d'au moins une gouverne de fuselage ajustable (9) pour commander l'avion subsonique (1) pour permettre un redressement, dans lequel la gouverne de fuselage (9) est disposée à proximité du cockpit (3) et est ajustable du fait qu'elle peut s'articuler autour d'un axe d'articulation latéral à l'axe longitudinal (L) du fuselage allongé (2) ou qu'elle peut coulisser hors du fuselage (2) entre une position de repos neutre et au moins une position de travail (23, 24, 25) dans laquelle la gouverne de fuselage (9) s'étend à distance du fuselage (2),
comprenant en outre une unité de commande (19) pour commander la position et/ou l'orientation de la gouverne de fuselage (9), dans lequel l'unité de commande (19) comprend de préférence un ordinateur, pour le contrôle de tangage de l'avion subsonique (1) pour redresser l'avion (1) d'une condition de superdécrochage, d'une condition de décrochage ou d'une autre condition aérodynamique spécifique à une condition de vol normale, et/ou pour améliorer la stabilité statique et/ou dynamique et la sécurité de l'avion (1) pendant le vol, tel que dans des conditions de vol normales et/ou pendant l'atterrissage et/ou le décollage.

2. Avion selon la revendication 1, dans lequel l'unité de commande comprend un ou plusieurs capteurs pour automatiser la commande de la gouverne de fuselage (9) au moins partiellement.

3. Avion selon la revendication 1 ou 2, dans lequel une gouverne de fuselage (9) est disposée à proximité de l'extrémité arrière (2d) du fuselage (2).

4. Avion selon la revendication 1, 2 ou 3, dans lequel la gouverne de fuselage (9) dans la position de repos forme une partie de la surface extérieure (2') du fuselage (2).

5. Avion selon l'une quelconque des revendications précédentes, comprenant une pluralité de gouvernes de fuselage (9).

6. Avion selon l'une quelconque des revendications précédentes, dans lequel au moins une gouverne de fuselage (9) forme une gouverne supérieure (9a) qui est disposée au niveau de la partie supérieure (2e) du fuselage (2), de préférence au moins partiellement au-dessus du cockpit (3).

7. Avion selon l'une quelconque des revendications précédentes, dans lequel au moins deux des gouvernes de fuselage (9) forment des gouvernes latérales (9b, 9c) qui sont disposées sur les côtés du fuselage, de préférence au moins partiellement à proximité du cockpit (3).

8. Avion selon la revendication 7, dans lequel les gouvernes latérales (9b, 9c) sont disposées au moins partiellement sur le dessous du fuselage (2), de préférence au moins partiellement sous le cockpit (3).

9. Avion selon l'une quelconque des revendications précédentes, dans lequel au moins une gouverne de fuselage (9) forme une gouverne inférieure (9e) qui est disposée au moins partiellement sur le dessous du fuselage (2), de préférence au moins partiellement sous le cockpit (3) ou l'extrémité arrière (2d) du fuselage (2).

10. Avion selon l'une quelconque des revendications précédentes, dans lequel les gouvernes de fuselage (9) comprennent une seule gouverne supérieure (9a) et deux gouvernes latérales (9b, 9c).

11. Produit-programme d'ordinateur comprenant des instructions qui, lorsque le programme est exécuté par un ordinateur, amènent l'ordinateur à commander un avion subsonique (1) pourvu d'un fuselage allongé (2) ayant un axe longitudinal (L) avec un cockpit (3) placé à proximité d'une première extrémité avant (2a) du fuselage (2), deux ailes (5) placées sur les côtés opposés du fuselage (2), pourvues d'ailerons (4), et une queue (6) située à proximité d'une deuxième extrémité arrière (2d) du fuselage (2), qui est pourvue d'une gouverne de profondeur (7) et d'une gouverne de direction (8), dans lequel le fuselage (2) est en outre pourvu d'au moins une gouverne de fuselage ajustable (9) pour commander l'avion subsonique (1) pour permettre un redressement, dans lequel la gouverne de fuselage (9) est disposée à proximité du cockpit (3) et est ajustable du fait qu'elle peut s'articuler autour d'un axe d'articulation latéral à l'axe longitudinal (L) du fuselage allongé (2) ou qu'elle peut coulisser hors du fuselage (2) entre une position de repos neutre et au moins une position de travail (23, 24, 25) dans laquelle la gouverne de fuselage (9) s'étend à distance du fuselage (2), dans lequel le produit-programme d'ordinateur comprend un code pouvant être lu par un ordinateur pour qu'un processeur effectue l'étape d'ajustement de ladite au moins une gouverne de fuselage ajustable (9), et l'étape de commande de la position et/ou de l'orientation de la gouverne de fuselage (9), pour le contrôle de tangage de l'avion subsonique (1) pour redresser l'avion (1) d'une condition de superdécrochage, d'une condition de décrochage ou d'une autre condition aérodynamique spécifique à une condition de vol normale, et/ou pour améliorer la stabilité statique et/ou dynamique et la sécurité de l'avion (1) pendant le vol, tel que dans des conditions de vol normales et/ou pendant l'atterrissage et/ou le décollage.

12. Procédé pour commander un avion subsonique (1) pourvu d'un fuselage allongé (2) ayant un axe longitudinal (L) avec un cockpit (3) placé à proximité d'une première extrémité avant (2a) du fuselage (2), deux ailes (5) placées sur les côtés opposés du fuselage (2), pourvues d'ailerons (4), et une queue (6) située à proximité d'une deuxième extrémité arrière (2d) du fuselage (2), qui est pourvue d'une gouverne de profondeur (7) et d'une gouverne de direction (8), dans lequel le fuselage (2) est en outre pourvu d'au moins une gouverne de fuselage ajustable (9) pour commander l'avion subsonique (1) pour permettre un redressement, dans lequel la gouverne de fuselage (9) est disposée à proximité du cockpit (3) et est ajustable du fait qu'elle peut s'articuler autour d'un axe d'articulation latéral à l'axe longitudinal (L) du fuselage allongé (2) ou qu'elle peut coulisser hors du fuselage (2) entre une position de repos neutre et au moins une position de travail (23, 24, 25) dans laquelle la gouverne de fuselage (9) s'étend à distance du fuselage (2), dans lequel le procédé comprend l'étape d'ajustement de ladite au moins une gouverne de fuselage ajustable (9), comprenant en outre l'étape de commande de la position et/ou de l'orientation de la gouverne de fuselage (9), de préférence en utilisant un ordinateur, pour le contrôle de tangage de l'avion subsonique (1) pour redresser l'avion (1) d'une condition de superdécrochage, d'une condition de décrochage ou d'une autre condition aérodynamique spécifique à une condition de vol normale, et/ou pour améliorer la stabilité statique et/ou dynamique et la sécurité de l'avion (1) pendant le vol, tel que dans des conditions de vol normales et/ou pendant l'atterrissage et/ou le décollage.

13. Simulateur d'un avion subsonique (1), comprenant de manière simulée un fuselage allongé (2) ayant un axe longitudinal (L) avec un cockpit (3) placé à proximité d'une première extrémité avant (2a) du fuselage (2), deux ailes (5) placées sur les côtés opposés du fuselage (2), pourvues d'ailerons (4), et une queue (6) située à proximité d'une deuxième extrémité arrière (2d) du fuselage (2), qui est pourvue d'une gouverne de profondeur (7) et d'une gouverne de direction (8), dans lequel le fuselage (2) est en outre pourvu d'au moins une gouverne de fuselage ajustable (9) pour commander l'avion subsonique (1) pour permettre un redressement, dans lequel la gouverne de fuselage (9) est disposée à proximité du cockpit (3) et est ajustable du fait qu'elle peut s'articuler autour d'un axe d'articulation latéral à l'axe longitudinal (L) du fuselage allongé (2) ou qu'elle peut coulisser hors du fuselage (2) entre une position de repos neutre et au moins une position de travail (23, 24, 25) dans laquelle la gouverne de fuselage (9) s'étend à distance du fuselage (2), comprenant en outre une unité de commande (19) pour commander de manière simulée la position et/ou l'orientation de la gouverne de fuselage (9), dans lequel l'unité de commande (19) comprend de préférence un ordinateur, pour le contrôle de tangage de l'avion subsonique (1) pour redresser l'avion (1) d'une condition de superdécrochage, d'une condition de décrochage ou d'une autre condition aérodynamique spécifique à une condition de vol normale, et/ou pour améliorer la stabilité statique et/ou dynamique et la sécurité de l'avion (1) pendant le vol, tel que dans des conditions de vol normales et/ou pendant l'atterrissage et/ou le décollage.

14. Produit-programme d'ordinateur comprenant des instructions qui, lorsque le programme est exécuté par un ordinateur, amènent l'ordinateur à commander de manière simulée un avion subsonique (1) pourvu d'un fuselage allongé (2) ayant un axe longitudinal (L) avec un cockpit (3) placé à proximité d'une première extrémité avant (2a) du fuselage (2), deux ailes (5) placées sur les côtés opposés du fuselage (2), pourvues d'ailerons (4), et une queue (6) située à proximité d'une deuxième extrémité arrière (2d) du fuselage (2), qui est pourvue d'une gouverne de profondeur (7) et d'une gouverne de direction (8), dans lequel le fuselage (2) est en outre pourvu d'au moins une gouverne de fuselage ajustable (9) pour commander l'avion subsonique (1) pour permettre un redressement, dans lequel la gouverne de fuselage (9) est disposée à proximité du cockpit (3) et est ajustable du fait qu'elle peut s'articuler autour d'un axe d'articulation latéral à l'axe longitudinal (L) du fuselage allongé (2) ou qu'elle peut coulisser hors du fuselage (2) entre une position de repos neutre et au moins une position de travail (23, 24, 25) dans laquelle la gouverne de fuselage (9) s'étend à distance du fuselage (2), dans lequel le produit-programme d'ordinateur comprend un code pouvant être lu par un ordinateur pour qu'un processeur effectue l'étape d'ajustement de manière simulée de ladite au moins une gouverne de fuselage ajustable (9), et l'étape de commande de manière simulée de la position et/ou de l'orientation de la gouverne de fuselage (9), pour le contrôle de tangage de l'avion subsonique (1) pour redresser l'avion d'une condition de superdécrochage, d'une condition de décrochage ou d'une autre condition aérodynamique spécifique à une condition de vol normale, et/ou pour améliorer la stabilité statique et/ou dynamique et la sécurité de l'avion (1) pendant le vol, tel que dans des conditions de vol normales et/ou pendant l'atterrissage et/ou le décollage.

15. Procédé pour commander de manière simulée un avion subsonique (1) pourvu d'un fuselage allongé (2) ayant un axe longitudinal (L) avec un cockpit (3) placé à proximité d'une première extrémité avant (2a) du fuselage (2), deux ailes (5) placées sur les côtés opposés du fuselage (2), pourvues d'ailerons (4), et une queue (6) située à proximité d'une deuxième extrémité arrière (2d) du fuselage (2), qui est pourvue d'une gouverne de profondeur (7) et d'une gouverne de direction (8), dans lequel le fuselage (2) est en outre pourvu d'au moins une gouverne de fuselage ajustable (9) pour commander l'avion subsonique (1) pour permettre un redressement, dans lequel la gouverne de fuselage (9) est disposée à proximité du cockpit (3) et est ajustable du fait qu'elle peut s'articuler autour d'un axe d'articulation latéral à l'axe longitudinal (L) du fuselage allongé (2) ou qu'elle peut coulisser hors du fuselage (2) entre une position de repos neutre et au moins une position de travail (23, 24, 25) dans laquelle la gouverne de fuselage (9) s'étend à distance du fuselage (2), dans lequel le procédé comprend l'étape d'ajustement de manière simulée de ladite au moins une gouverne de fuselage ajustable (9), comprenant en outre l'étape de commande de manière simulée de la position et/ou de l'orientation de la gouverne de fuselage (9), de préférence en utilisant un ordinateur, pour le contrôle de tangage de l'avion subsonique (1) pour redresser l'avion (1) d'une condition de superdécrochage, d'une condition de décrochage ou d'une autre condition aérodynamique spécifique à une condition de vol normale, et/ou pour améliorer la stabilité statique et/ou dynamique et la sécurité de l'avion (1) pendant le vol, tel que dans des conditions de vol normales et/ou pendant l'atterrissage et/ou le décollage.
